# EUROPEAN PATENT SPECIFICATION

(11) **EP 1 785 797 B1**
(45) Date of publication and mention of the grant of the patent: **09.01.2019**
(21) Application number: 06023204.8
(22) Date of filing: 08.11.2006
(51) Int. Cl.: G05B 19/418

(54) **System and method for production planning by visualizing products and resources in a manufacturing process**
System und Verfahren zur Produktionsplanung mittels Visualisierung von Produkten und Ressourcen in einem Herstellungsprozess
Système et procédé de planification de production en visualisant des produits et des ressources dans un processus de fabrication

(30) Priority: 09.11.2005 US 270399
(43) Date of publication of application: 16.05.2007
(73) Proprietor: The Boeing Company, Chicago, IL 60606-1596 (US)
(72) Inventor: Bouffiou, Carl E., Tacoma, WA 98407 (US); Schreiber, Robert J., St. Louis, MO 63122 (US); Franzen, Steve, St. Charles, MO 63304 (US); Anelle, Joe, St. Charles, MO 63304 (US); Kehner, William A., Sumner, WA 98390 (US); Vanhorne, Mark E., Bellevue, WA 98006 (US)
(74) Representative: Land, Addick Adrianus Gosling

(56) References cited:
- EP-A- 0 483 039
- US-A1- 2002 080 194

## Description

This invention relates generally to information technology, and more particularly, to systems and methods for production planning in manufacturing processes.

Complex manufacturing projects such as the design and manufacture of aircraft generally require that engineering information, component parts and processes be successfully integrated. With regard in particular to the production of aircraft, typically hundreds of thousands of parts and associated processes must be successfully integrated according to a comprehensive plan to produce an aircraft in accordance with the engineering information.

Engineering information typically includes engineering drawings and parts lists that cooperatively form an engineering product plan that describes how materials, components assemblies and sub-assemblies must be combined to form the desired product. A manufacturing process plan is subsequently compiled so that the identified parts in the desired product may be properly scheduled for assembly on the factory floor. Suitable scheduling and coordination is particularly important in complex projects since factors such as the overall cost of the project, the time required for completion of the project, and the risk of failure must be accurately estimated. In addition, other variables of importance such as the overall efficiency of the project need to be accurately estimated. Accordingly, the manufacturing process plan typically includes factory floor planning, tool planning and scheduling, compilation of work plans for assembly personnel, assembly plans, and other similar activities.

Although existing process planning and analysis methods are useful, they nevertheless exhibit several drawbacks, and thus may not accurately represent a selected process. For example, the planned configuration, as expressed in the manufacturing process plan may require assembly of the product in a sequence not contemplated by the designed configuration, as expressed in the engineering process plan. Since existing methods generally do not permit variability in tasks or resources in the process to be effectively resolved, conflicts that arise during the product assembly must often be resolved informally on the factory floor, which in turn, often requires expensive and time-consuming rework.

What is needed in the art is a process planning system and method that permits realistic evaluation of a production process, so that production planning and engineering design may be more accurately performed.

US 2002/0080194 A1, published 27 June 2002, discloses a computer readable recording medium that stores a program for managing CAD data so as to easily reproduce an assembly structure previously confirmed by an operator. The program causes a computer to perform first and second steps. The first step causes a unit to be displayed on the basis of assembly data and parts data in response to a display request. The parts data includes data about shapes of parts and version information about versions of the parts. The assembly data defines a structure of the unit formed by one or more parts. The second step assigns the version information about parts that form the unit displayed to the assembly data.

The present invention is defined by the appended claims. The invention comprises a method and apparatus for production planning by visualizing products and resources in a manufacturing environment.

### BRIEF DESCRIPTION OF THE DRAWINGS

Embodiments of the present invention are described in detail below with reference to the following drawings.
FIGURE 1 is a block diagrammatic view of a system for production planning in a manufacturing process, according to an embodiment of the invention;
FIGURE 2 is a partial schematic view of a system of managing product and process information in a manufacturing process, according to another embodiment of the invention;
FIGURE 3 is a flowchart that describes a method of managing product and process information in a manufacturing process, according to still another embodiment of the invention;
FIGURE 4 is a system for managing product and process information in a manufacturing process in accordance with an embodiment of the present invention; and
FIGURE 5 is a side elevational view of an aircraft having one or more components fabricated using methods and systems for manufacturing in accordance with embodiments of the invention.

### DETAILED DESCRIPTION

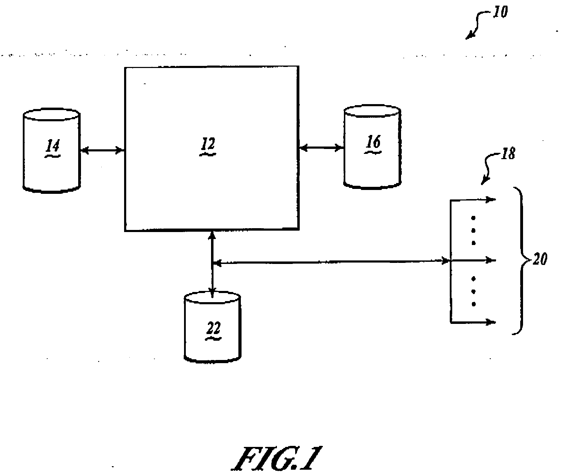

The present invention relates to systems and methods for production planning in a manufacturing process. Many specific details of certain embodiments of the invention are set forth in the following description and in FIGURES 1 through 5 to provide a thorough understanding of such embodiments. One skilled in the art, however, will understand that the present invention may have additional embodiments, or that the present invention may be practiced without several of the details described in the following description.

FIGURE 1 is a block diagrammatic view of an apparatus 10 for production planning in a manufacturing process, according to an embodiment of the invention. The apparatus 10 includes a processing unit 12 that generally includes any programmable electronic device that is operable to receive programming instructions and input data, and to process the data according to the programming instructions. Although a single processing unit is shown in FIGURE 1, the processing unit 12 may be comprised of a plurality of processing units that are coupled serially or in parallel so that each processing unit performs a selected portion of a total computational task performed by the processing unit 12. The apparatus 10 also includes a product information database 14 that is operable to store engineering information of various types. The engineering information database 14 includes digital representations of selected component parts that collectively comprise the product generated in the manufacturing process. Accordingly, the digital representations include three-dimensional digital models that are compatible with known computer-aided design (CAD) systems, such as the CATIA digital modeling system, available from Daussault Systemes Corporation of Suresnes, France, although other suitable digital modeling systems exist. Other engineering information may be included in the database 14. For example, the database 14 may include drawing trees that permit engineering drawings to be accessed in an ordered manner, as well as parts lists that define the configuration of the product. Other information stored in the database 14 may include part tolerances and process specifications such as torque requirements, and any other desired information. In a particular embodiment of the invention, the engineering information database 14 may be compiled as disclosed in a co-pending and commonly owned U.S. Patent Application Serial No. 11/013,311 filed on December 15, 2004, entitled "Systems and Methods for Process-Driven Bill of Material".

The apparatus 10 also includes a process information database 16 that is operable to store process-related information for the product generated in the manufacturing process. Briefly and in general terms, the process information database 16 includes part resource and planning relationships for a selected component part or assembly. In particular, the planning relationships include precedence networks that describe a predetermined assembly sequence for a component part or assembly. In the present discussion, a precedence network is a multi-dependency representation of a project that includes the various activities in the project depicted as nodes, and further includes sequence elements that express at least a temporal relationship between the various nodes. In a particular embodiment of the present invention, the process structures may include data structures that are created as disclosed in a co-pending and commonly owned U.S. Patent Application Serial No. 11/012,901 filed on December 15, 2004, entitled "System and Method for Production Planning Analysis Using Discrete Event Simulation". Although FIGURE 1 shows the databases 14 and 16 as discrete operational units, it is understood that the informational content of the databases 14 and 16 may be incorporated into a single unit.

With continued reference to FIGURE 1, the apparatus 10 includes a communications system 18 that is configured to communicate with the processor 12. Accordingly, the communications system 18 may be used to provide engineering and/or planning data to the processor 12, which may suitably format the engineering and/or planning data for storage in the database 14 and the database 16. The communication system 18 may include a wide area network (WAN) or a local area network (LAN), but in a particular embodiment, the communications system 18 includes an internet-based system. In any case, the communications system 18 is coupled to one or more requestors 20 that communicate with the processor 12 through the communications system 18. The one or more requestors 20 thus provide engineering and/or planning data to the processor 12, and receive suitably processed data from the processor 12 through the communications system 18.

The apparatus 10 includes a storage device 22 that receives processed information from the processing unit 12, which will be described in greater detail below. Alternately, the storage device 22 may also serve as an intermediate storage location for information generated by the processor 12 before the information is transferred to one or more information requestors 20.

The operation of the apparatus 10 of FIGURE 1 will now be described in detail. As discussed above, the requestors 20 may transfer engineering and/or planning data to the apparatus 10 through the communications system 18 so that the data is available to the processor 12. The engineering data generally describes the configuration of a desired product, such as a commercial aircraft, while the planning data generally comprises a scheduling definition, which is generally expressed as a precedence network. Briefly, and in general terms, the planning data describes the sequence definition that may be used to define the schedule. The processing unit 12 accordingly processes the data to generate "context" information that reflects a selected assembly or sub-assembly at a desired stage of assembly.

For example, in one particular embodiment, and with reference to aircraft production, hydraulics, fuel and electrical systems, and structural design may generally be executed and planned by different organizations that may develop respective designs and planning information with minimal mutual interaction. Accordingly, one or more conflicts may result during integration of the foregoing systems and structures designs. For example, at a selected integration step, it may be determined that the assembly must be partially disassembled in order to permit the installation of other systems and/or structural components because the prior integration steps were not properly ordered. Further, at the selected integration step, it may become apparent that sufficient access is not present to admit a tool and/or a hand to effect the integration step, due to an error in the design of a system and/or a structural component. Accordingly, the context information generated within the processor 12 includes three-dimensional digital models (e.g., models created using the CATIA digital modeling system, or other similar modeling systems) that are retrieved from the product information database 14 that are selectively combined with information in the process information database 16 to provide a graphical view of an assembly at a selected integration step. Thus, if conflicts are observed in the context information, the product information (stored in database 14) and/or the process information (stored in database 16) may be readily altered to specify a different design and/or assembly sequence to avoid the observed conflicts. Accordingly, conflicts between the product, process and resource definitions may be advantageously resolved prior to the release of the foregoing definitions.

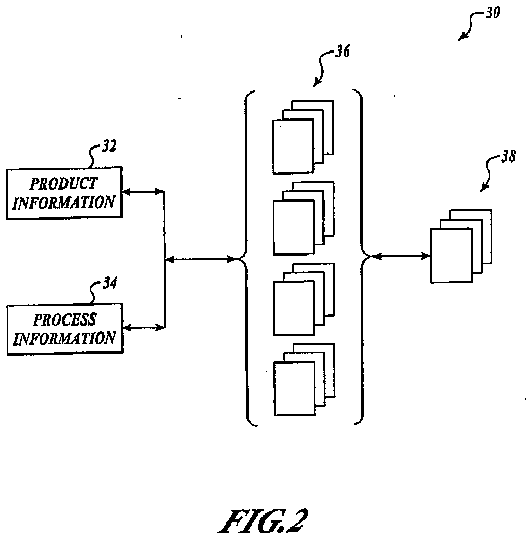

FIGURE 2 is a partial schematic view of a method 30 of creating and managing a manufacturing plan in a manufacturing process, according to another embodiment of the invention. The method 30 includes compiling a product information source 32 and a process information source 34 that are generally separately compiled and provide design configuration information for components, assemblies and/or sub-assemblies, and assembly sequencing and planning information, respectively. The product information source 32 and the process information source 34 thus include information for a variety of interrelated systems that are generally prepared by various engineering and planning groups.

As further shown in FIGURE 2, selected portions of the product information source 32 and the product information source 34 may be extracted and processed (as described in detail with reference to FIGURE 1) to generate a plurality of contexts 36. The contexts 36 are graphical representations of selected assemblies and/or sub-assemblies that may be reviewed by affected engineering and/or planning groups so that conflicts resulting from planning and/or engineering errors may be detected. For example, the design of components that comprise the selected assembly may introduce conflicts that preclude assembly efficiency by requiring partial disassembly of a previously assembled object so that access for a hand, a tool, or other required access, may be obtained. Similarly, planning information conflicts may introduce the foregoing access difficulties, and may also introduce difficulties of different kinds. For example, the planning information may require the use of selected installation tools, which are not subsequently removed. Consequently, the installation tools may undesirably be incorporated into the assembly.

On the basis of the foregoing review of the contexts 36, revised information may be introduced into at least one of the product information source 32 and the process information source 34, so that a revised plurality of the contexts 36 may be generated and evaluated. The evaluation of the contexts 36 may proceed by visually examining each of the contexts 36 under various selected viewing conditions. For example, and in one selected embodiment, selected portions of the assembly may be highlighted using a desired color while other portions of the assembly are uniformly presented in a contrasting color, so that the selected portion may be clearly viewed. In another specific embodiment, the selected portions of the assembly may be desirably highlighted, while other portions are viewed as "grayed" with lower contrast than the highlighted portions.

Still other specific embodiments of processes for visual examination are possible. For example, the selected portion of the assembly may be viewed using a minimum viewing option that shows all of the structure and processes that have occurred in a preceding path (as expressed, for example, in a precedence network corresponding to the assembly). Conversely, a maximum viewing option would be operable to provide a comprehensive view that includes not only a preceding path, but contributions from parallel paths in the precedence network also. Contexts may also be selectively viewed by applying a filter to the context that is based upon certain selected attributes of the assembly so that selected portions of the context may be viewed. Filtering the context advantageously permits a viewer to remove extraneous detail and view only the data that is relevant to the viewer. The context may also be viewed dynamically, so that selected portions of the context may be viewed in a desired position. For example, the context may be viewed in a position that is oriented in approximately about the same position that would obtain in the actual assembly. Accordingly, a viewer of the context may conveniently review ergonomic positions of an individual effecting the assembly, tool clearances available to the individual, and other similar details.

Still referring to FIGURE 2, based upon successive generation and review of the contexts 36, a final context 38 is generated that reflects a relatively matured informational content in the product information source 32 and/or the process information source 34. The final context 38 may advantageously be used as a baseline context for future design and planning efforts, and may also be used as a training aid for instructing personnel in the proper assembly of a selected assembly. Still other uses for the final context 38 are possible. For example, it may be advantageously used to develop repair and/or maintenance operations. It is understood, however, that the final context may be continuously evolving, so that no entirely definitive context may exist.

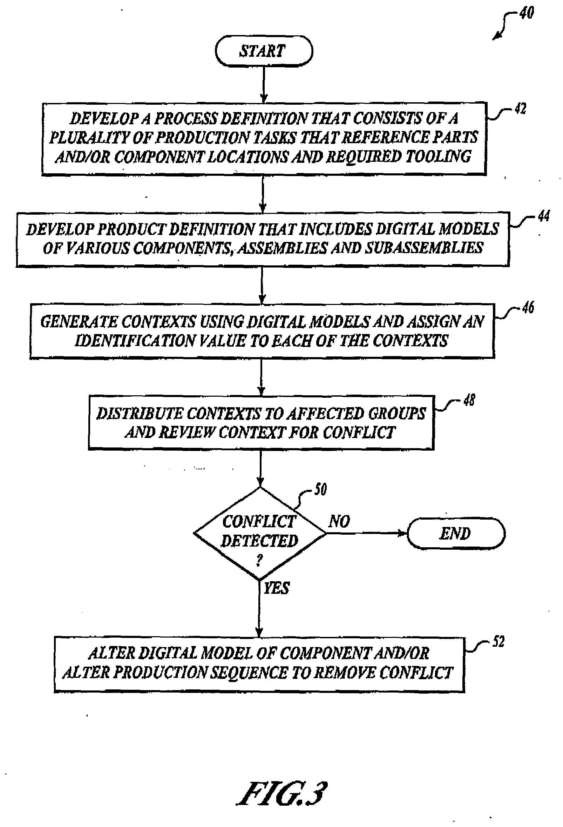

FIGURE 3 is a flowchart that will be used to describe a method 40 of managing product and process information in a manufacturing process, according to still another embodiment of the invention. At block 42, a process definition is developed that includes a plurality of production tasks that reference part and/or component locations, required tooling and a temporal representation of the production tasks, as expressed for example, in a precedence network. At block 44, a product definition is formulated that includes digital representations of various components, assemblies and sub-assemblies. In a specific embodiment of the present invention, the digital models are created and viewable using the CATIA digital modeling system. At block 46, contexts are generated using the product definition and the process definition and an identification value may be assigned to each of the contexts. The identification value may be used to identify an affected group (e.g., the identification value may be an address that corresponds to the affected group), or it may refer to a particular version of the context. At block 48, the contexts are communicated to the one or more affected groups for review. The affected groups may include planning personnel and/or design personnel that may engage in a colloquy regarding planning and/or the design of the desired product. At block 50, if a conflict is detected that is related to planning or design, or both, then the digital model of a selected component and/or a production sequence may be selectively altered to remove the conflict, as shown in block 52. If no conflicts are detected, the method terminates, as also shown at block 50. Otherwise, the method 40 recursively returns to block 46, and revised contexts are generated.

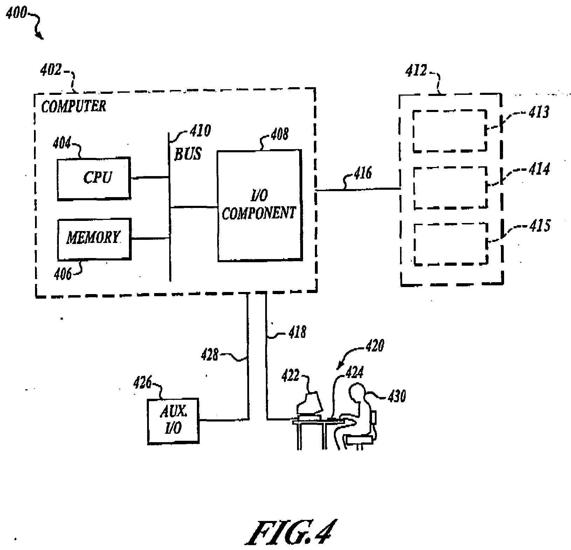

Embodiments of methods and systems in accordance with the present invention may be implemented on a variety of computing hardware platforms. For example, FIGURE 4 is a system 400 for performing a manufacturing process in accordance with an embodiment of the present invention. Unless otherwise specified below, the components of the system 400 are of generally-known construction, and will not be described in detail. For the sake of brevity, only significant details and aspects of the system 400 will be described. As shown in FIGURE 4, in this embodiment, the system 400 includes a computer 402 having a central processing unit (CPU) 404 and a memory component 406. The memory component 406 may include one or more memory modules, such as Random Access Memory (RAM) modules, Read Only Memory (ROM) modules, Dynamic Random Access Memory (DRAM) modules, and any other suitable memory modules. The computer 402 also includes an input/output (I/O) component 408 that may include a variety of known I/O devices, including network connections, video and graphics cards, disk drives or other computer-readable media drives, displays, or any other suitable I/O modules. A data bus 410 operatively couples the CPU 404, memory component 406, and the I/O component 408.

The system 400 embodiment shown in FIGURE 4 further includes a data base 412 operatively coupled to the computer 402. The database 412 is operatively coupled to the computer 402 via a first communication link 416. In this embodiment, the database 412 includes a first portion 413 adapted to store product information, a second portion 414 adapted to store process information, and a third portion 415 adapted to store processed information from the computer 402.

As further shown in FIGURE 4, the system 400 further includes a control component 420 having a monitor 422 and a command input device 424 (e.g. a keyboard, an audio-visual input device, etc.). A second communication link 418 operatively couples the control component 420 to the computer 402. The system 400 also includes an auxiliary output device 426 coupled to the computer 402 by a third communication link 428. The auxiliary output device 426 may include a printer, a compact disk (CD) burner, a storage device, a communication port, or any other desired output device.

In one aspect, a machine-readable medium may be used to store a set of machine-readable instructions (e.g. a computer program) into the computer 402, wherein the machine -readable instructions embody a method of performing manufacturing operations in accordance with the teachings of the present invention. The machine-readable medium may be any type of medium which can store data that is readable by the computer 402, including, for example, a floppy disk, CD ROM, optical storage disk, magnetic tape, flash memory card, digital video disk, RAM, ROM, or any other suitable storage medium. The machine-readable medium, or the instructions stored thereon, may be temporarily or permanently installed in any desired component of the system 400, including, for example, the I/O component 408, the memory component 406, and the auxiliary output device 426. Alternately, the machine-readable instructions may be implemented directly into one or more components of the computer 402, without the assistance of the machine-readable medium.

In operation, the computer 402 may be configured to perform one or more of the aspects of the methods of manufacturing described above. For example, an operator 430 may input a command through the command input device 424 to cause the computer to retrieve product information from the first portion 413 of the data base 412 and process information from the second portion 414 of the data base 412. The computer 402 may then use a set of software instructions stored in the computer 402 (e.g. in the memory component 406) that performs one or more aspects of the methods of manufacturing described above on the product and process information, and may then transmit processed information to the third portion 415 of the data base 412. Alternately, one or more aspects of the various processes described above may be implemented in the computer 402 using any suitable programmable or semi-programmable hardware components (e.g. EPROM components).

Results of the processes performed by the computer 402 in accordance with one or more embodiments of the invention may be transmitted via the data bus 410 to the I/O component 408. The results may also be transmitted to the control component 420 and to the auxiliary output device 426 via the second and third communications links 418 and 428. The operator 430 may view the results of the one or more methods on the control monitor 422, and may take appropriate action, including revising analysis parameters and inputs, and continuing or repeating the one or more embodiments of analysis methods using different product and process information as desired.

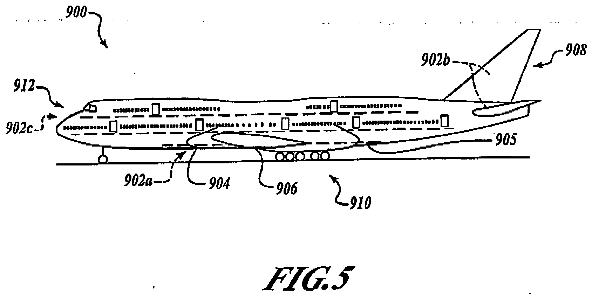

It will be appreciated that embodiments of the present invention may be used to manufacture a wide variety of products, and the invention is not limited to the particular embodiments and products described above. For example, FIGURE 5 is a side elevational view of an aircraft 900 having one or more components 902 fabricated using methods and systems for manufacturing in accordance with embodiments of the invention. In this embodiment, the aircraft 900 generally includes a fuselage 905 including wing assemblies 906, a tail assembly 908, and a landing assembly 910. The aircraft 900 further includes one or more propulsion units 904, a control system 912 (not visible), and a host of other systems and subsystems that enable proper operation of the aircraft 900.

It will be appreciated that systems and methods in accordance with the present invention may be utilized in the fabrication of any number of components 902 of the aircraft 900, including, for example, the various components and sub-components of the tail assembly 908, the wing assemblies 906, the fuselage 905, the propulsion units 904, and any other suitable portion of the aircraft 900. Of course, embodiments of the present invention may also be used to manufacture the aircraft 900 in its entirety.

Although the aircraft 900 shown in FIGURE 5 is generally representative of a commercial passenger aircraft, including, for example, the 737, 747, 757, 767, 777, and 7E7 models commercially-available from The Boeing Company of Chicago, Illinois, the inventive systems and methods disclosed herein may also be employed in the assembly of virtually any other types of aircraft. More specifically, embodiments of the present invention may be applied to the manufacture and assembly of other passenger aircraft, fighter aircraft, cargo aircraft, rotary aircraft, and any other types of manned or unmanned aircraft, including those described, for example, in The Illustrated Encyclopedia of Military Aircraft by Enzo Angelucci, published by Book Sales Publishers, September 2001, and in Jane's All the World's Aircraft published by Jane's Information Group of Coulsdon, Surrey, United Kingdom.

It may also be appreciated that alternate embodiments of apparatus and methods in accordance with the present invention may be utilized in the manufacture of a wide variety of other products, including, for example, boats, ships, missiles, automobiles and other vehicles, buildings, or any other suitable products or assemblies. Embodiments of systems and methods in accordance with the present invention may improve the efficiencies and accuracies of manufacturing processes, and may reduce costs associated with product design and manufacture in comparison with prior art systems and methods.

While various embodiments of the invention have been illustrated and described, as noted above, many changes can be made without departing from the scope of the invention. Accordingly, the scope of the invention is not limited by the disclosure of the various embodiments. Instead, the invention should be determined entirely by reference to the claims that follow.

## Claims

1. A method (30) of creating and managing a manufacturing plan for an article of manufacture (900, 902), comprising:
retaining engineering information (32) for the article of manufacture (900, 902) in a first database (14), wherein the engineering information (32) includes three-dimensional digital models of selected component parts of the article of manufacture;
retaining process information (34) for the article of manufacture (900, 902) in a second database (16), wherein the process information (34) comprises component resource and planning relationships pertaining to the article of manufacture, wherein the planning relationships comprise one or more precedence networks that describe a predetermined assembly sequence for the article of manufacture (900, 902);
receiving the three-dimensional digital models of the selected component parts from the first database (14);
receiving the predetermined assembly sequence for the article of manufacture from the second database (16);
based upon a processing of the received three dimensional digital models and the received predetermined assembly sequence, generating at least one context (36) that graphically depicts a predetermined portion of the article of manufacture (900, 902) at a desired stage of assembly;
reviewing the at least one context (36) to determine if a conflict exists; and
revising the process information (34) of the second database (16) to specify a different assembly sequence to avoid the determined conflict.

2. The method (30) of claim 1, wherein reviewing the at least one context further comprises viewing the context using a predetermined color to highlight a selected portion of the context, and assigning a contrasting color to remaining portions of the context.

3. The method (30) of claim 1 or 2, wherein reviewing the at least one context further comprises viewing a context that incorporates structural and process information obtained from a serially-coupled portion of the precedence network.

4. The method (30) of any of claims 1-3, wherein reviewing the at least one context further comprises viewing a context that incorporates structural and process information obtained from parallel portions of the precedence network.

5. The method (30) of any of claims 1-4, wherein reviewing the at least one context further comprises viewing a context at a predetermined orientation.

6. The method (30) of any of claims 1-5, wherein reviewing the at least one context further comprises filtering the context to remove extraneous details.

7. The method (30) of any of claims 1-6, further comprising revising a content in the engineering information based upon the reviewed context.

8. The method (30) of any of claims 1-7, wherein reviewing the at least one context further comprises generating a final context that provides a preferred product and process definition.

9. An apparatus (10, 30, 400) for use in a method according to any of claims 1-8, comprising:
a first database (14) configured to retain engineering information (32) for an article of manufacture, wherein the engineering information (32) includes three-dimensional digital models of selected component parts of the article of manufacture;
a second database (16) configured to retain process information (34) for the article of manufacture, wherein the process information (34) comprises component resource and planning relationships pertaining to the article of manufacture, wherein the planning relationships comprise one or more precedence networks that describe a predetermined assembly sequence for the article of manufacture (900, 902);
a command input device (424); and
a processor (12, 404) operable to
receive the three-dimensional digital models of the selected component parts from the first database (14);
receive the predetermined assembly sequence for the article of manufacture from the second database (16);
based upon a processing of the received three-dimensional digital models and the received predetermined assembly sequence, generate at least one context (36) that graphically depicts a predetermined portion of the article of manufacture (900, 902) at a desired stage of assembly such that the at least one context (36) is reviewable by an operator (430) to determine if a conflict exists; and
revise the process information (34) of the second database (16) based upon an input by the operator (430) to specify a different assembly sequence to avoid a determined conflict.

10. The apparatus of claim 9, wherein the first database further comprises drawing trees configured to provide ordered access to the digital models.

11. The apparatus of claim 9 or 10, further comprising a storage device coupled to the processor that is configured to store the generated context.

12. The apparatus of any of claims 9-11, wherein the processor further comprises a plurality of processors that cooperatively process the information received from the first and second databases.

## Patentansprüche

1. Verfahren (30) zur Erzeugung und Verwaltung eines Herstellungsplans für ein Herstellungsprodukt (900, 902), wobei das Verfahren umfasst:
Halten von Konstruktionsinformationen (32) für das Herstellungsprodukt (900, 902) in einer ersten Datenbank (14), wobei die Konstruktionsinformationen (32) dreidimensionale digitale Modelle von ausgewählten Komponententeilen des Herstellungsprodukts umfassen;
Halten von Prozessinformationen (34) für das Herstellungsprodukt (900, 902) in einer zweiten Datenbank (16), wobei die Prozessinformation (34) Komponentenressourcen und Planungsbeziehungen umfassen, die sich auf das Herstellungsprodukt beziehen, wobei die Planungsbeziehungen ein oder mehrere Prioritätsnetzwerke umfassen, die eine vorbestimmte Montagereihenfolge für das Herstellungsprodukt (900, 902) beschreiben;
Empfangen der dreidimensionalen digitalen Modelle der ausgewählten Komponententeile von der ersten Datenbank (14);
Empfangen der vorbestimmten Montagereihenfolge für das Herstellungsprodukt von der zweiten Datenbank (16);
auf der Grundlage einer Verarbeitung der empfangenen dreidimensionalen digitalen Modelle und der empfangenen vorbestimmten Montagereihenfolge, Erzeugen wenigstens eines Kontextes (36), der einen vorbestimmten Abschnitt des Herstellungsprodukts (900, 902) in einer gewünschten Montagestufe graphisch darstellt;
Überprüfen des wenigstens einen Kontextes (36), um festzustellen, ob ein Konflikt existiert; und
Überarbeiten der Prozessinformation (34) der zweiten Datenbank (16) zum Spezifizieren einer anderen Montagereihenfolge, um den festgestellten Konflikt zu vermeiden.

2. Verfahren (30) nach Anspruch 1, wobei das Überprüfen des wenigstens einen Kontextes weiterhin umfasst: Betrachten des Kontextes unter Verwendung einer vorbestimmten Farbe, um einen ausgewählten Abschnitt des Kontextes hervorzuheben, und Zuordnen einer Kontrastfarbe zu den verbleibenden Teilen des Kontextes.

3. Verfahren (30) nach Anspruch 1 oder 2, wobei das Überprüfen des wenigstens einen Kontextes weiterhin umfasst: Betrachten eines Kontextes, der Struktur- und Prozessinformationen enthält, die von einem in Reihe gekoppelten Abschnitt des Prioritätsnetzwerks erhalten werden.

4. Verfahren (30) nach einem der Ansprüche 1 bis 3, wobei das Überprüfen des wenigstens einen Kontextes weiterhin umfasst: Betrachten eines Kontextes, der Struktur- und Prozessinformationen enthält, die von parallelen Abschnitten des Prioritätsnetzwerks erhalten werden.

5. Verfahren (30) nach einem der Ansprüche 1 bis 4, wobei das Überprüfen des wenigstens einen Kontextes weiterhin umfasst: Betrachten eines Kontextes in einer vorbestimmten Ausrichtung.

6. Verfahren (30) nach einem der Ansprüche 1 bis 5, wobei das Überprüfen des wenigstens einen Kontextes weiterhin umfasst: Filtern des Kontextes, um überflüssige Details zu entfernen.

7. Verfahren (30) nach einem der Ansprüche 1 bis 6, das weiterhin umfasst: Überarbeiten eines Inhalts in den Konstruktionsinformationen auf der Grundlage des überprüften Kontextes.

8. Verfahren (30) nach einem der Ansprüche 1 bis 7, wobei das Überprüfen des wenigstens einen Kontextes weiterhin umfasst: Erzeugen eines endgültigen Kontextes, der eine bevorzugte Produkt- und Prozessdefinition bereitstellt.

9. Vorrichtung (10, 30, 400) zur Verwendung in einem Verfahren nach einem der Ansprüche 1 bis 8, wobei die Vorrichtung umfasst:
eine erste Datenbank (14), die dazu konfiguriert ist, Konstruktionsinformationen (32) für ein Herstellungsprodukt zu halten, wobei die Konstruktionsinformationen (32) dreidimensionale digitale Modelle von ausgewählten Komponententeilen des Herstellungsprodukts umfassen;
eine zweite Datenbank (16), die dazu konfiguriert ist, Prozessinformationen (34) für das Herstellungsprodukt zu halten; wobei die Prozessinformation (34) Komponentenressourcen und Planungsbeziehungen umfassen, die sich auf das Herstellungsprodukt beziehen, wobei die Planungsbeziehungen ein oder mehrere Prioritätsnetzwerke umfassen, die eine vorbestimmte Montagereihenfolge für das Herstellungsprodukt (900, 902) beschreiben;
eine Befehlseingabevorrichtung (424); und
einen Prozessor (12, 404), der betriebsfähig ist zum:
Empfangen der dreidimensionalen digitalen Modelle der ausgewählten Komponententeile von der ersten Datenbank (14);
Empfangen der vorbestimmten Montagereihenfolge für das Herstellungsprodukt von der zweiten Datenbank (16);
auf der Grundlage einer Verarbeitung der empfangenen dreidimensionalen digitalen Modelle und der empfangenen vorbestimmten Montagereihenfolge, Erzeugen wenigstens eines Kontextes (36), der einen vorbestimmten Abschnitt des Herstellungsprodukts (900, 902) in einer gewünschten Montagestufe graphisch darstellt, so dass der wenigstens eine Kontext (36) von einem Bediener (430) überprüft werden kann, um festzustellen, ob ein Konflikt existiert; und
Überarbeiten der Prozessinformation (34) der zweiten Datenbank (16) auf der Grundlage einer Eingabe durch den Bediener (430) zum Spezifizieren einer anderen Montagereihenfolge, um den festgestellten Konflikt zu vermeiden.

10. Vorrichtung nach Anspruch 9, wobei die erste Datenbank weiterhin Zeichnungsbäume umfasst, die dazu konfiguriert sind, einen geordneten Zugriff auf die digitalen Modelle bereitzustellen.

11. Vorrichtung nach Anspruch 9 oder 10, die weiterhin umfasst: eine mit dem Prozessor gekoppelte Speichervorrichtung, die dazu konfiguriert ist, den erzeugten Kontext zu speichern.

12. Vorrichtung nach einem der Ansprüche 9 bis 11, wobei der Prozessor weiterhin umfasst: eine Mehrzahl von Prozessoren, welche die empfangenen, von der ersten und zweiten Datenbank stammenden Informationen zusammenwirkend verarbeiten.

## Revendications

1. Procédé (30) de création et de gestion d'un plan de fabrication pour un article manufacturé (900, 902), comprenant:
la conservation d'informations techniques (32) relatives à l'article manufacturé (900, 902) dans une première base de données (14), lesdites informations techniques (32) comprenant des modèles numériques tridimensionnels de certaines pièces constitutives de l'article manufacturé,
la conservation d'informations de processus (34) relatives à l'article manufacturé (900, 902) dans une deuxième base de données (16), les informations de processus (34) comprenant une ressource concernant les constituants et des relations de planification connexes à l'article manufacturé, lesdites relations de planification comprenant un ou plusieurs réseaux d'antécédents décrivant une séquence d'assemblage prédéterminée relative à l'article manufacturé (900, 902),
la réception des modèles numériques tridimensionnels desdites certaines pièces constitutives en provenance de la première base de données (14),
la réception de la séquence d'assemblage prédéterminée relative à l'article manufacturé en provenance de la deuxième base de données (16),
compte tenu d'un traitement des modèles numériques tridimensionnels reçus et de la séquence d'assemblage prédéterminée reçue, la création d'au moins un contexte (36) représentant graphiquement une partie prédéterminée de l'article manufacturé (900, 902) à un stade souhaité de l'assemblage,
l'examen de l'au moins un contexte (36) afin de déterminer s'il existe un conflit, et
la révision des informations de processus (34) de la deuxième base de données (16) pour définir une séquence d'assemblage différente afin d'éviter le conflit déterminé.

2. Procédé (30) selon la revendication 1, dans lequel l'examen de l'au moins un contexte comprend en outre la visualisation du contexte au moyen d'une couleur prédéterminée pour mettre en évidence une certaine partie du contexte, et l'attribution d'une couleur contrastée aux parties restantes du contexte.

3. Procédé (30) selon la revendication 1 ou 2, dans lequel l'examen de l'au moins un contexte comprend en outre la visualisation d'un contexte associant des informations structurelles et de processus obtenues à partir d'une partie du réseau d'antécédents couplée en série.

4. Procédé (30) selon l'une quelconque des revendications 1 à 3, dans lequel l'examen de l'au moins un contexte comprend en outre la visualisation d'un contexte associant des informations structurelles et de processus obtenues à partir de parties du réseau d'antécédents en parallèle.

5. Procédé (30) selon l'une quelconque des revendications 1 à 4, dans lequel l'examen de l'au moins un contexte comprend en outre la visualisation d'un contexte selon une orientation prédéterminée.

6. Procédé (30) selon l'une quelconque des revendications 1 à 5, dans lequel l'examen de l'au moins un contexte comprend en outre la filtration du contexte pour éliminer des détails superflus.

7. Procédé (30) selon l'une quelconque des revendications 1 à 6, comprenant en outre la révision d'un contenu des informations techniques compte tenu du contexte examiné.

8. Procédé (30) selon l'une quelconque des revendications 1 à 7, dans lequel l'examen de l'au moins un contexte comprend en outre la création d'un contexte final fournissant la définition d'un produit et d'un processus préférée.

9. Dispositif (10, 30, 400) destiné au procédé selon l'une quelconque des revendications 1 à 8, comprenant:
une première base de données (14) conçue pour conserver des informations techniques (32) relatives à un article manufacturé, les informations techniques (32) comprenant des modèles numériques tridimensionnels de certaines pièces constitutives de l'article manufacturé,
une deuxième base de données (16) conçue pour conserver des informations de processus (34) relatives à l'article manufacturé, les informations de processus (34) comprenant une ressource concernant les constituants et des relations de planification connexes à l'article manufacturé, lesdites relations de planification comprenant un ou plusieurs réseaux d'antécédents décrivant une séquence d'assemblage prédéterminée relative à l'article manufacturé (900, 902),
un dispositif de saisie d'ordre (424), et
un processeur (12, 404) susceptible de:
recevoir les modèles numériques tridimensionnels desdites certaines pièces constitutives en provenance de la première base de données (14),
recevoir la séquence d'assemblage prédéterminée relative à l'article manufacturé en provenance de la deuxième base de données (16),
compte tenu d'un traitement des modèles numériques tridimensionnels reçus et de la séquence d'assemblage prédéterminée reçue, créer au moins un contexte (36) représentant graphiquement une partie prédéterminée de l'article manufacturé (900, 902) à un stade souhaité de l'assemblage de manière que l'au moins un contexte (36) puisse être examiné par un opérateur (430) afin de déterminer s'il existe un conflit, et
réviser les informations de processus (34) de la deuxième base de données (16) compte tenu d'un ordre de l'opérateur (430) pour définir une séquence d'assemblage différente afin d'éviter un conflit déterminé.

10. Dispositif selon la revendication 9, dans lequel la première base de données comprend en outre des arbres de dessins conçus pour fournir un accès ordonné aux modèles numériques.

11. Dispositif selon la revendication 9 ou 10, comprenant en outre un dispositif de stockage couplé au processeur et conçu pour stocker le contexte créé.

12. Dispositif selon l'une quelconque des revendications 9 à 11, dans lequel le processeur comprend en outre une pluralité de processeurs qui traitent de façon coopérative les informations reçues en provenance des première et deuxième bases de données.
